# EUROPÄISCHE PATENTANMELDUNG

(11) **EP 4 270 135 A1**
(43) Veröffentlichungstag der Anmeldung: **01.11.2023**
(21) Anmeldenummer: 23155816.4
(22) Anmeldetag: 09.02.2023
(51) Int. Cl.: G05D 1/02

(54) **ASSISTENZSYSTEM ZUR GENERIERUNG VON VIRTUELLEN FELDGRENZEN FÜR AUTONOME LANDWIRTSCHAFTLICHE ARBEITSMASCHINEN**

(30) Priorität: 27.04.2022 DE 102022110128
(71) Anmelder: CLAAS Selbstfahrende Erntemaschinen GmbH, 33428 Harsewinkel (DE)
(72) Erfinder: Mähler, Reinhold, 33378 Rheda-Wiedenbrück (DE); Ehlert, Christian, 33719 Bielefeld (DE); Schröder, Axel, 33332 Gütersloh (DE); Thiesmann, Waldemar, 49080 Osnabrück (DE); Nacke, Eberhard, 33332 Gütersloh (DE); Bohl, Arne, 33330 Gütersloh (DE); Redenius, Jannik, 32361 Pr. Oldendorf (DE); Witte, Johann, 58730 Fröndenberg (DE); Neitemeier, Dennis, 59510 Lippetal (DE); Baumgarten, Joachim, 48361 Beelen (DE); Bormann, Bastian, 33334 Gütersloh (DE); Apke, Christoph, 33659 Bielefeld (DE); Monkenbusch, Robin, 33378 Rheda-Wiedenbrück (DE); Korthals, Timo, 33818 Leopoldshöhe (DE)
(74) Vertreter: CLAAS Gruppe

(57) **Zusammenfassung**

Die vorliegende Erfindung betrifft ein auf elektronischem Datenaustausch basierendes Assistenzsystem (13) zur Generierung von virtuellen Feldgrenzen (7) und eine Datenbank (3) und/oder eine Referenzdatenbank (4) eines solchen Assistenzsystems.

Die vorliegende Erfindung beruht auf dem allgemeinen Gedanken, dass das Assistenzsystem (13) basierend auf elektronischem Datenaustausch zur Generierung von virtuellen Feldgrenzen (7) für wenigstens eine und/oder mehrere autonome landwirtschaftliche Arbeitsmaschinen (10, 11) ausgebildet und/oder programmiert ist.

## Beschreibung

Die vorliegende Erfindung betrifft ein auf elektronischem Datenaustausch basierendes Assistenzsystem zur Generierung von virtuellen Feldgrenzen für autonome landwirtschaftliche Arbeitsmaschinen und eine Datenbank und/oder eine Referenzdatenbank eines solchen Assistenzsystems. Ferner betrifft die Erfindung ein Verfahren zur Generierung eines Geo-Fence-Datensatzes für ein solches Assistenzsystem.

In der modernen Landwirtschaft sind vermehrt Bestrebungen dahingehend zu erkennen, Arbeitseinsätze autonom durchzuführen, um die Produktivität und Wirtschaftlichkeit der Prozesse zu erhöhen. Hierfür kommen sogenannte autonome landwirtschaftliche Arbeitsmaschinen zum Einsatz, die sich dadurch auszeichnen, dass kein Bediener in einer Kabine zur Steuerung derselben vorhanden ist bzw. sein muss. Demnach steht bei autonomen landwirtschaftlichen Arbeitsmaschinen kein Bediener zur Verfügung, der einen durchzuführenden landwirtschaftlichen Arbeitsablauf mit einer Abfolge von verschiedenen Arbeitsschritten kennt und einzelne Steuerfunktionen während des Betriebs der Arbeitsmaschine auf einer landwirtschaftlichen Fläche ausführen bzw. beauftragen kann. Derartige autonome landwirtschaftliche Arbeitsmaschinen werden daher auch als unbemannte landwirtschaftliche Arbeitsmaschinen bezeichnet.

Aus dem Stand der Technik sind bereits Systeme zur Führung von Fahrzeugen bekannt, die ein autonomes Abfahren einer Route auf der landwirtschaftlichen Fläche durch bemannte Arbeitsmaschinen erlauben.

Die DE 10 2016 121 523 A1 beschreibt eine Verarbeitungseinrichtung eines Kraftfahrzeuges, die dazu eingerichtet ist, ein Verlassen eines vorbestimmten geographischen Gebiets durch das Kraftfahrzeug zu verhindern. Diese Technik wird auch Geofencing genannt und kann das Bestimmen einer geographischen Position des Kraftfahrzeugs und des Vergleichens der bestimmten Position mit Grenzen des geographischen Gebiets umfassen. Gelangt das Kraftfahrzeug näher als vorbestimmt an eine Grenze des Gebiets, so kann die Verarbeitungseinrichtung dazu eingerichtet sein, einen Kurs zu ändern oder das Kraftfahrzeug anzuhalten. Hierbei ist das geographische Gebiet mittels einer Markierung gekennzeichnet, wobei eine Abtasteinrichtung des Kraftfahrzeuges dazu eingerichtet ist, die Markierung zu erfassen. Die Markierung kann optisch erfasst werden, beispielsweise mittels einer Kamera. Alternativ kann die Markierung beispielsweise auch induktiv, kapazitiv oder mittels Radar erfasst werden.

Zwar können solche bemannten Fahrzeuge durch Systeme entlang einer Wegstrecke autonom bewegt werden, allerdings sind für die Ausführung einiger Steuerfunktionen zur Durchführung von Arbeitsschritten während die Route abgefahren wird, Eingaben seitens eines Bedieners notwendig, der sich in der Kabine der Arbeitsmaschine befindet, so dass beispielsweise an die Arbeitsmaschine adaptierte Arbeitsaggregate angehoben oder abgesenkt werden, wie bei einer Fahrt im Vorgewende.

Autonome landwirtschaftliche Arbeitsmaschinen verfügen allerdings nicht über einen solchen Bediener, der Kenntnisse über den auszuführenden landwirtschaftlichen Arbeitsablauf mit allen Arbeitsschritten hat. Vielmehr sind die autonomen landwirtschaftlichen Arbeitsmaschinen an und für sich erst einmal nicht dazu in der Lage, einen Arbeitsschritt auszuführen, solange sie keine Daten hierzu erlangt haben, die die autonome landwirtschaftliche Arbeitsmaschine dazu befähigen, den Arbeitsschritt oder mehrere Arbeitsschritte eines landwirtschaftlichen Arbeitsablaufs durchzuführen.

Der vorliegenden Erfindung liegt die Aufgabe zugrunde, ein auf Feldgrenzen bezogenes Assistenzsystem für autonome landwirtschaftliche Arbeitsmaschinen anzugeben, wobei insbesondere ein verbesserter und/oder optimierter Einsatz einer autonomen landwirtschaftlichen Arbeitsmaschine ermöglicht wird.

Diese Aufgabe wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, dass das Assistenzsystem basierend auf elektronischem Datenaustausch zur Generierung von virtuellen Feldgrenzen für wenigstens eine und/oder mehrere autonome landwirtschaftliche Arbeitsmaschinen ausgebildet und/oder programmiert ist.

Ein elektronischer Datenaustausch kann durch eine und/oder mehrere kommunizierende Verbindungen zwischen zwei und oder mehreren Komponenten des Assistenzsystems ausgebildet sein. Das Assistenzsystem kann dazu ausgebildet und/oder programmiert sein, über den elektronischen Datenaustausch Daten für eine und/oder mehrere autonome landwirtschaftliche Arbeitsmaschinen bereitzustellen, sodass die eine und/oder mehreren autonomen landwirtschaftlichen Arbeitsmaschinen wenigstens einen Arbeitsschritt oder mehrere Arbeitsschritte eines landwirtschaftlichen Arbeitsablaufs, insbesondere entlang Fahrrouten eines Routenplans, unter Berücksichtigung der virtuellen Feldgrenzen durchführen können. Das Assistenzsystem kann eine Steuereinrichtung einer autonomen landwirtschaftlichen Arbeitsmaschine oder mehrere Steuereinrichtungen mehrerer autonomer landwirtschaftlicher Arbeitsmaschinen umfassen. Eine solche Steuereinrichtung einer autonomen landwirtschaftlichen Arbeitsmaschine kann zur Ansteuerung der autonomen landwirtschaftlichen Arbeitsmaschine, insbesondere wenigstens einer Komponente der autonomen landwirtschaftlichen Arbeitsmaschine, ausgebildet und/oder programmiert sein.

Unter einer kommunizierenden Verbindung kann hier zu verstehen sein, dass zwischen zwei miteinander kommunizierend verbundenen Komponenten eine Datenverbindung, insbesondere eine bidirektionale oder unidirektionale Datenverbindung, ausgebildet ist, mit der elektrische Signale, insbesondere Steuersignale und/oder Regelsignale und/oder Messsignale, in analoger Form und/oder digitaler Form übertragbar sind. Diese kommunizierende Verbindung, insbesondere bei mehr als zwei Komponenten, kann ein Bussystem ausbilden. Ferner können diese miteinander kommunizierend verbundenen Komponenten eine kabelgebundene und/oder drahtlose Datenverbindung ausbilden.

Das Assistenzsystem ist dazu ausgebildet und/oder programmiert, für eine oder mehrere autonome landwirtschaftliche Arbeitsmaschinen einen Geo-Fence-Datensatz bereitzustellen, und die Anwendung des Geo-Fence-Datensatzes durch die eine oder die mehreren autonomen landwirtschaftlichen Arbeitsmaschinen zu überwachen. Der Geo-Fence-Datensatz kann eingemessene und/oder vermessene und/oder zertifizierte Geo-Fence-Daten umfassen. Der Geo-Fence-Datensatz kann alternativ oder zusätzlich Feldgrenz-Daten bezüglich der virtuellen Feldgrenzen eines landwirtschaftlichen Feldes, welches von der einen oder den mehreren autonomen landwirtschaftlichen Arbeitsmaschinen befahren wird, aufweisen. Alternativ oder zusätzlich kann der Geo-Fence-Datensatz einen Routenplan mit Fahrrouten aufweisen, die innerhalb des über die virtuellen Feldgrenzen begrenzten landwirtschaftlichen Feldes von der einen oder den mehreren autonomen landwirtschaftlichen Arbeitsmaschinen abgefahren werden sollen.

Der Routenplan kann die Anzahl an autonomen landwirtschaftlichen Arbeitsmaschinen und/oder einen Vorschlag für Geschwindigkeit der autonomen landwirtschaftlichen Arbeitsmaschinen und/oder einen Einsatz von Betriebsmitteln und/oder Ortsstellen zum Laden von Energie und/oder Treibstoff und/oder weiteren Betriebsmitteln umfassen.

Wenigstens eine oder mehrere autonome landwirtschaftliche Arbeitsmaschinen können jeweils eine Sensoreinrichtung aufweisen, die zur Ermittelung von Daten während des Betriebs der jeweiligen autonomen landwirtschaftlichen Arbeitsmaschine ausgebildet und/oder programmiert ist, wobei die diese Daten insbesondere Betriebsparameterdaten und/oder Umgebungsparameterdaten der autonomen landwirtschaftlichen Arbeitsmaschine repräsentieren. Eine solche Sensoreinrichtung kann über die Steuereinrichtung der jeweiligen autonomen landwirtschaftlichen Arbeitsmaschine eine kommunizierende verbundene Komponente des Assistenzsystems ausbilden. Eine solche Sensoreinrichtung kann ein Kamerasystem, eine induktive Sensoreinrichtung, eine kapazitive Sensoreinrichtung und/oder Radar basierte Sensoreinrichtung aufweisen.

Der Geo-Fence-Datensatz kann alternativ oder zusätzlich Geodaten und/oder Geoinformationen bezüglich des durch die virtuellen Feldgrenzen begrenzten landwirtschaftlichen Feldes, welches von der einen oder den mehreren autonomen landwirtschaftlichen Arbeitsmaschinen befahren wird, insbesondere in Form von Daten, insbesondere digitalen Daten, aufweisen. Alternativ oder zusätzlich kann der Geo-Fence-Datensatz Bilder, insbesondere Bilddaten, bezüglich des durch die virtuellen Feldgrenzen begrenzten landwirtschaftlichen Feldes, welches von der einen oder den mehreren autonomen landwirtschaftlichen Arbeitsmaschinen befahren wird, insbesondere in Form von Daten, insbesondere digitalen Daten, aufweisen. Die Geodaten und/oder Geoinformationen und/oder Bilder können Hindernisse für die eine oder die mehreren autonomen landwirtschaftlichen Arbeitsmaschinen, Bodenverhältnisse, Bilddaten und/oder Point-of-Interesst-Punkte umfassen. Die Geodaten und/oder Geoinformationen und/oder Bilder können Positionen des durch die virtuellen Feldgrenzen begrenzten landwirtschaftlichen Feldes, insbesondere örtlich und/oder geolokalisiert, zugeordnet sein. Mit anderen Worten ausgedrückt, kann eine autonome landwirtschaftliche Arbeitsmaschine mit diesem Geo-Fence-Datensatz bezüglich des durch die virtuellen Feldgrenzen begrenzten landwirtschaftlichen Feldes Geodaten und/oder Geoinformationen und/oder Bilder bezüglich ihrer Lage und/oder Position innerhalb des durch die virtuellen Feldgrenzen begrenzten landwirtschaftlichen Feldes entnehmen.

Der Geo-Fence-Datensatz kann alternativ oder zusätzlich erfasste, insbesondere im Vorfeld erfasste, Geodaten und/oder Geoinformationen und/oder Bilder und/oder Betriebsparameterdaten und/oder Umgebungsparameterdaten einer einzelnen, insbesondere autonomen, landwirtschaftlichen Arbeitsmaschine umfassen. Dieser Geo-Fence-Datensatz kann beispielsweise mit einer Sensoreinrichtung der einzelnen, insbesondere autonomen, landwirtschaftlichen Arbeitsmaschine erfasst werden. Dieser erfasste Geo-Fence-Datensatz kann von einer weiteren oder mehreren weiteren autonomen landwirtschaftlichen Arbeitsmaschinen genutzt werden.

Das Assistenzsystem kann alternativ oder zusätzlich mit dem Geo-Fence-Datensatz zum Austausch geplanter Fahrrouten und/oder abgefahrener Fahrrouten und/oder teilweise abgefahrener Fahrrouten zwischen wenigstens zwei oder mehreren autonomen landwirtschaftlichen Arbeitsmaschinen ausgebildet und/oder programmiert sein. Das Assistenzsystem kann alternativ oder zusätzlich zur Fahrroutenplanung und/oder Aufgabenplanung und/oder Taskplanung für wenigstens zwei oder mehrere autonome landwirtschaftliche Arbeitsmaschinen ausgebildet und/oder programmiert sein.

Das Assistenzsystem kann alternativ oder zusätzlich dazu ausgebildet und/oder programmiert sein, während der Überwachung der einen oder der mehreren autonomen landwirtschaftlichen Arbeitsmaschinen ein Verlassen des durch die virtuellen Feldgrenzen vorbestimmten geographischen Gebiets, insbesondere des landwirtschaftlichen Feldes, zu verhindern und/oder entgegenzuwirken.

Durch die virtuellen Feldgrenzen kann insbesondere auf Markierungen, die auf dem landwirtschaftlichen Feld angeordnet werden müssen, verzichtet werden, sodass ein verbesserter und/oder optimierter Einsatz der Feldgrenzen ohne eine Belastung des landwirtschaftlichen Feldes für eine oder der mehrere autonome landwirtschaftliche Arbeitsmaschinen erzielt wird. Außerdem sind virtuelle Feldgrenzen im Vergleich zu Markierungen, die auf dem landwirtschaftlichen Feld angeordnet werden müssen, im Wesentlichen wartungsfrei.

Bei einer vorteilhaften Weiterbildung der erfindungsgemäßen Lösung ist vorgesehen, dass der Geo-Fence-Datensatz Feldgrenz-Daten bezüglich der virtuellen Feldgrenzen eines landwirtschaftlichen Feldes, welches von der einen oder den mehreren autonomen landwirtschaftlichen Arbeitsmaschinen befahren wird, aufweist. Die Feldgrenz-Daten können virtuelle Feldgrenzen definieren, die wenigstens abschnittsweise geradlinig und/oder wenigstens abschnittsweise gebogen ausgebildet sind. Die Feldgrenz-Daten können abgeschlossene virtuelle Feldgrenzen aufweisen, die eine Fläche des landwirtschaftlichen Feldes vollständig begrenzen.

Bei einer vorteilhaften Weiterbildung der erfindungsgemäßen Lösung ist vorgesehen, dass das Assistenzsystem dazu ausgebildet und/oder programmiert ist, die Anwendung des Geo-Fence-Datensatzes durch die eine oder die mehreren autonomen landwirtschaftlichen Arbeitsmaschinen dahingehend zu überwachen, dass keine der autonomen landwirtschaftlichen Arbeitsmaschinen eine virtuelle Feldgrenze unerlaubt überschreitet. Hierdurch wird eine Beschädigung der autonomen landwirtschaftlichen Arbeitsmaschinen und/oder anderer landwirtschaftlichen Felder entgegengewirkt. Eine unerlaubte Überschreitung der Feldgrenze kann beispielsweise während eines Vorgewendes vorliegen, während eine Überschreitung der virtuellen Feldgrenze bei einer geplanten Auffahrt auf das landwirtschaftliche Feld und/oder bei einer geplanten Abfahrt vom landwirtschaftlichen Feld eine erlaubte Überschreitung der Feldgrenze ausbilden kann.

Das Assistenzsystem kann dazu ausgebildet und/oder programmiert sein, in der Nähe einer virtuellen Feldgrenze des Geo-Fence-Datensatzes eine Ansteuerung wenigstens eines oder mehrerer adaptierter Arbeitsaggregate der autonomen landwirtschaftlichen Arbeitsmaschinen anzusteuern. Es kann vorgesehen sein, dass in der Nähe einer virtuellen Feldgrenze des Geo-Fence-Datensatzes wenigstens ein adaptiertes Arbeitsaggregat angehoben oder abgesenkt wird, um die erforderliche Fläche für eine Fahrt im Vorgewende zu reduzieren.

Bei einer vorteilhaften Weiterbildung der erfindungsgemäßen Lösung ist vorgesehen, dass das Assistenzsystem zur Überwachung der Anwendung des Geo-Fence-Datensatzes durch die eine oder die mehreren autonomen landwirtschaftlichen Arbeitsmaschinen dazu ausgebildet und/oder programmiert ist, basierend auf einer ermittelten Position der einen oder der mehreren autonomen landwirtschaftlichen Arbeitsmaschinen bezüglich der virtuellen Feldgrenzen die eine oder die mehreren autonomen landwirtschaftlichen Arbeitsmaschinen derart anzusteuern, dass einer Überschreitung der virtuellen Feldgrenzen durch eine oder mehrere autonome landwirtschaftliche Arbeitsmaschinen entgegengewirkt wird.

Bei einer vorteilhaften Weiterbildung der erfindungsgemäßen Lösung ist vorgesehen, dass das Assistenzsystem eine Verarbeitungseinrichtung aufweist, die mit einer Datenbank und/oder mit einer Referenzdatenbank kommunizierend verbunden ist, wobei die Verarbeitungseinrichtung von der einen oder den mehreren autonomen landwirtschaftlichen Arbeitsmaschinen beabstandet angeordnet ist, wobei die Verarbeitungseinrichtung kommunizierend mit der einen oder den mehreren autonomen landwirtschaftlichen Arbeitsmaschinen verbunden ist, um den Geo-Fence-Datensatz bereitzustellen und die eine oder die mehreren autonomen landwirtschaftlichen Arbeitsmaschinen zu überwachen. Das Assistenzsystem kann ein datenbankbasiertes Verwaltungssystem aufweisen, das die Verarbeitungseinrichtung und die mit dieser zur Übertragung von Daten kommunizierend verbundene Datenbank umfasst. Die Datenbank kann als zentrale Datenbank oder aber als dezentrale, also verteilte, Datenbank ausgebildet sein. Ist die Datenbank als dezentrale Datenbank ausgebildet, so ist sie vorzugsweise als Blockchain-Datenbank ausgebildet. Auch ist es möglich, dass die Datenbank als cloudbasierte Datenbank implementiert ist. Die Verarbeitungseinrichtung kann weiterhin mit der Referenzdatenbank zur kommunizierenden Übertragung von Daten verbunden sein, in der wenigstens ein Geo-Fence-Datensatz hinterlegt sein kann, auf die die Verarbeitungseinrichtung zugreifen kann. Die Referenzdatenbank kann unabhängig und/oder beabstandet von der Datenbank des datenbankbasierten Verwaltungssystems ausgebildet sein.

Bei einer vorteilhaften Weiterbildung der erfindungsgemäßen Lösung ist vorgesehen, dass das Assistenzsystem eine Positionsbestimmungseinrichtung zur Positionsbestimmung der einen oder der mehreren autonomen landwirtschaftlichen Arbeitsmaschinen bezüglich der virtuellen Feldgrenzen aufweist. Hierbei kann die Positionsbestimmungseinrichtung wenigstens teilweise von Bereichen, die durch die virtuellen Feldgrenzen virtuell markiert werden, beabstandet angeordnet sein.

Die Positionsbestimmungseinrichtung kann zur Positionsbestimmung mittels Satellitennavigationssignalen ausgebildet und/oder programmiert sein, wobei wenigstens eine Satellitenvorrichtung zur Positionsbestimmung der einen oder der mehreren autonomen landwirtschaftlichen Arbeitsmaschinen bezüglich der virtuellen Feldgrenzen verwendet werden kann. Die Satellitenvorrichtung kann GPS- und/oder Galileo-Satelliten umfassen. Die Positionsbestimmungseinrichtung kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer stationären Bodenstation eingesetzt wird, um die Position der autonomen landwirtschaftlichen Arbeitsmaschine innerhalb der virtuellen Feldgrenzen zu ermitteln. Hierbei kann die stationäre Bodenstation außerhalb des durch die virtuellen Feldgrenzen begrenzten landwirtschaftlichen Feldes angeordnet sein.

Bei einer vorteilhaften Weiterbildung der erfindungsgemäßen Lösung ist vorgesehen, dass wenigstens eine autonome landwirtschaftliche Arbeitsmaschine wenigstens ein adaptiertes Arbeitsaggregat aufweist. Das adaptierte Arbeitsaggregat kann beispielsweise ein Anhänger sein.

Bei einer vorteilhaften Weiterbildung der erfindungsgemäßen Lösung ist vorgesehen, dass das Assistenzsystem dazu ausgebildet und/oder programmiert ist, während der Überwachung der einen oder der mehreren autonomen landwirtschaftlichen Arbeitsmaschinen ein, insbesondere ein ungewolltes und/oder ein ungeplantes, Verlassen dieser einen oder dieser mehreren autonomen landwirtschaftlichen Arbeitsmaschinen eines durch virtuelle Feldgrenzen des Geo-Fence-Datensatzes festgelegten landwirtschaftlichen Feldes zu verhindern.

Bei einer vorteilhaften Weiterbildung der erfindungsgemäßen Lösung ist vorgesehen, dass das Assistenzsystem dazu ausgebildet und/oder programmiert ist, wenigstens einer autonomen landwirtschaftlichen Arbeitsmaschine einen Routenplan mit Fahrrouten wenigstens innerhalb eines über virtuelle Feldgrenzen begrenzten landwirtschaftlichen Feldes zu übermitteln, und einen Arbeitsbetrieb der autonomen landwirtschaftlichen Arbeitsmaschine zumindest teilweise wenigstens innerhalb des über die virtuellen Feldgrenzen begrenzten landwirtschaftlichen Feldes zu steuern und den Arbeitsbetrieb der autonomen landwirtschaftlichen Arbeitsmaschine wenigstens innerhalb des über die virtuellen Feldgrenzen begrenzten landwirtschaftlichen Feldes zu überwachen.

Bei einer vorteilhaften Weiterbildung der erfindungsgemäßen Lösung ist vorgesehen, dass das Assistenzsystem zum Bereitstellen des Geo-Fence-Datensatzes dazu ausgebildet und/oder programmiert ist, auf Referenzdaten zuzugreifen, die in einer Datenbank und/oder in einer von der Datenbank unabhängigen Referenzdatenbank hinterlegt sind. Die Referenzdaten können agronomische Daten, insbesondere Bodendaten, Bestandsdaten, Ertragsdaten und/oder Flächendaten, Geodaten und/oder Wetterdaten und/oder Qualitätskriterien und/oder Qualitätswerte und/oder Geo-Fence-Datensätze und/oder virtuelle Feldgrenzen, sein, wobei die Referenzdaten in der Datenbank und/oder in einer von der Datenbank unabhängigen Referenzdatenbank hinterlegt sind und die Verarbeitungseinrichtung mit der Referenzdatenbank zur Übertragung von Daten verbunden, insbesondere kommunizierend verbunden, ist.

Bei einer vorteilhaften Weiterbildung der erfindungsgemäßen Lösung ist vorgesehen, dass das Assistenzsystem dazu ausgebildet und/oder programmiert ist, wenigstens eine Simulation von Arbeitswegen und/oder Abladepunkten und/oder Maschinendaten und/oder Einstellungen wenigstens einer autonomen landwirtschaftlichen Arbeitsmaschine anhand einer Strategievorgabe vorzunehmen und diese wenigstens eine autonome landwirtschaftliche Arbeitsmaschine basierend auf Ausgangsgrößen der Simulation innerhalb des durch virtuelle Feldgrenzen des Geo-Fence-Datensatzes festgelegten landwirtschaftlichen Feldes anzusteuern und/oder zu überwachen. Als Ausgangsgröße der Simulation können Anweisungen erzeugt werden, die die autonome landwirtschaftliche Arbeitsmaschine dazu befähigen, den vorab simulierten Arbeitsschritt anschließend in der Realität entsprechend der Simulation durchzuführen. Diese Anweisungen können an eine Steuereinrichtung einer autonomen landwirtschaftlichen Arbeitsmaschine übermittelt werden, wobei die Steuereinrichtung die autonome landwirtschaftliche Arbeitsmaschine gemäß der übermittelten Anweisung ansteuert.

Bei einer vorteilhaften Weiterbildung der erfindungsgemäßen Lösung ist vorgesehen, dass das Assistenzsystem dazu ausgebildet und/oder programmiert ist, dass mindestens ein Optimierungsziel nutzerspezifisch vorgegeben wird, wobei das mindestens eine Optimierungsziel als Randbedingung in der Simulation verwendet wird.

Die Verwendung von Optimierungszielen unter Beachtung von virtuellen Feldgrenzen als Randbedingung in der Simulation sorgt dafür, dass die Durchführung des Arbeitsschrittes im Hinblick auf eine spezifische durch den Nutzer, beispielsweise einen Landwirt, dem die zu bearbeitende landwirtschaftliche Fläche und/oder die autonome landwirtschaftliche Arbeitsmaschine gehört, festlegbare Zielsetzung hin simuliert werden kann. Wird beispielsweise ein Optimierungsziel betreffend die Bodenschonung durch den Nutzer gewählt, so wird die an die Steuereinrichtung übermittelte Anweisung anders aussehen als würde ein Optimierungsziel betreffend den Durchsatz und/oder die Bearbeitungszeit gewählt werden. Es ist auch möglich dass der Nutzer mehrere Optimierungsziele gewichtet vorgibt, sodass anteilig verschiedene Zielsetzungen in der Simulation der Durchführung des Arbeitsschrittes berücksichtigt werden und eine diese verschieden gewichteten Zielsetzungen berücksichtigende Anweisung als Ausgangsgröße der Simulation erzeugt wird, die dann von der Steuereinrichtung der autonomen landwirtschaftlichen Arbeitsmaschine zur Ansteuerung derselben während der realen Durchführung des Arbeitsschrittes dient.

Bei einer vorteilhaften Weiterbildung der erfindungsgemäßen Lösung ist vorgesehen, dass das Assistenzsystem dazu ausgebildet und/oder programmiert ist, für einen landwirtschaftlichen Arbeitseinsatz der einen oder mehreren autonomen landwirtschaftliche Arbeitsmaschinen in Abhängigkeit des Geo-Fence-Datensatzes bezüglich eines durch virtuelle Feldgrenzen des Geo-Fence-Datensatz festgelegten landwirtschaftlichen Feldes eine Optimierung einer Routenplanung, einer Arbeitsgeschwindigkeit und/oder einer Einstellung der einen oder mehreren autonomen landwirtschaftlichen Arbeitsmaschinen, insbesondere in Abhängigkeit der Anzahl eingesetzter autonomer landwirtschaftlicher Arbeitsmaschinen, der Ernte-/Umweltbedingungen und/oder einer benutzerseitig vorgegebenen Arbeits- und/oder Ernte-Strategie durchzuführen.

Bei einer vorteilhaften Weiterbildung der erfindungsgemäßen Lösung ist vorgesehen, dass das Assistenzsystem zur Ausführung der folgenden Schritte zur Erzeugung von Daten zur Steuerung wenigstens einer autonomen landwirtschaftlichen Arbeitsmaschine, insbesondere entlang eines Routenplans mit den Fahrrouten, ausgebildet und/oder programmiert ist: Generieren eines digitalen Abbilds eines zu bearbeitenden landwirtschaftlichen Feldes mit virtuellen Feldgrenzen basierend auf dem Geo-Fence-Datensatz durch eine Verarbeitungseinrichtung und Speichern des digitalen Abbilds des zu bearbeitenden landwirtschaftlichen Feldes in einer mit der Verarbeitungseinrichtung zur Übertragung von Daten verbundenen Datenbank.

Ferner ist das Assistenzsystem ausgebildet und/oder programmiert, ein digitales Abbild der autonomen landwirtschaftlichen Arbeitsmaschine durch die Verarbeitungseinrichtung zu generieren und dieses digitale Abbild der autonomen landwirtschaftlichen Arbeitsmaschine in der Datenbank zu speichern. Ferner ist das Assistenzsystem dazu ausgebildet und/oder programmiert, mindestens einen Arbeitsschritt einer Abfolge an Arbeitsschritten umfassenden landwirtschaftlichen Arbeitsablaufs bezüglich des Routenplans mit Fahrrouten anhand des digitalen Abbilds des zu bearbeitenden landwirtschaftlichen Feldes unter Anwendung eines Simulationsalgorithmus durch die Verarbeitungseinrichtung zu simulieren, wobei aus dem digitalen Abbild der autonomen landwirtschaftlichen Arbeitsmaschine Daten abgeleitet werden, die als Randbedingungen in der Simulation verwendet werden und die virtuellen Feldgrenzen des Geo-Fence-Datensatzes als Randbedingungen in der Simulation verwendet werden, und wobei als Ausgangsgröße der Simulation eine Anweisung zur Durchführung des Arbeitsschrittes durch die autonome landwirtschaftliche Arbeitsmaschine erzeugt wird. Ferner ist das Assistenzsystem ausgebildet und/oder programmiert, eine als Ausgangsgröße der Simulation erzeugte Anweisung an eine Steuereinrichtung der autonomen landwirtschaftlichen Arbeitsmaschine zu übermitteln und eine Ausführung der Anweisung durch die Steuereinrichtung der autonomen landwirtschaftlichen Arbeitsmaschine zu bewirken.

Die Simulation kann eine Simulation von Fahrrouten, Abladepunkten, Maschinendaten und/oder Maschinen-Einstellungen anhand vorliegenden Daten umfassen.

Das Assistenzsystem kann wenigstens eine Verarbeitungseinrichtung und/oder wenigstens eine Datenbank und/oder wenigstens eine Referenzdatenbank aufweisen, die insbesondere dazu ausgebildet und/oder programmiert sind, bei den zuvor angeführten und/oder den nachfolgend angeführten Schritten mitzuwirken. Die Verarbeitungseinrichtung und/oder die Datenbank und/oder die Referenzdatenbank können kommunizierend miteinander verbunden sein.

Mittels des Assistenzsystems ist es demnach möglich, die Durchführung eines Arbeitsschrittes einer Abfolge an Arbeitsschritten umfassenden Arbeitsablaufs virtuell ablaufen zu lassen, bevor die eigentliche reale Durchführung auf dem landwirtschaftlichen Feld erfolgt. In den Modellbildungsschritten werden digitale Zwillinge sowohl des zu bearbeitenden landwirtschaftlichen Feldes, insbesondere die virtuellen Feldgrenzen des Geo-Fence-Datensatzes, als auch der autonomen landwirtschaftlichen Arbeitsmaschine ausgebildet, anhand derer die Durchführung des Arbeitsschrittes im Simulationsschritt simuliert wird. Der Vorteil der Nutzung von digitalen Zwillingen liegt darin, dass ein nahezu identisches Abbild der realen landwirtschaftlichen Felder und der autonomen landwirtschaftlichen Arbeitsmaschinen digitalisiert vorliegt, in denen sämtliche für die Durchführung eines Arbeitsschrittes notwendigen Parameter hinterlegt sind. Mit anderen Worten ausgedrückt, stellen die digitalen Abbilder des landwirtschaftlichen Feldes und der autonomen landwirtschaftlichen Arbeitsmaschine eine im Wesentlichen exakte Kopie des realen landwirtschaftlichen Feldes und der realen autonomen landwirtschaftlichen Arbeitsmaschine dar.

Anhand der Simulation des Arbeitsschrittes, die auf dem digitalen Abbild des zu bearbeitenden landwirtschaftlichen Feldes basiert und die aus dem digitalen Abbild der autonomen landwirtschaftlichen Arbeitsmaschine abgeleiteten Daten als auch die virtuellen Feldgrenzen als Randbedingungen nutzt, kann ein vorzunehmender Arbeitsschritt auf dem zu bearbeitenden landwirtschaftlichen Feld vorab äußerst präzise simuliert werden, wobei als Ausgangsgröße der Simulation Anweisungen erzeugt werden, die die autonome landwirtschaftliche Arbeitsmaschine dazu befähigen, den vorab simulierten Arbeitsschritt anschließend in der Realität entsprechend der Simulation durchzuführen. Mit anderen Worten ausgedrückt, wird durch die Simulation, die die digitalen Abbilder des zu bearbeitenden landwirtschaftlichen Feldes und der autonomen landwirtschaftlichen Arbeitsmaschine berücksichtigt, die die an und für sich "unwissende" autonome landwirtschaftliche Arbeitsmaschine mit der Fähigkeit ausstattet, den Arbeitsschritt selbsttätig, also autonom ohne einen Bediener auf oder in der Nähe der autonomen landwirtschaftlichen Arbeitsmaschine durchzuführen. Anhand der Anweisung kann die Steuereinrichtung demnach die einzelnen Arbeitsaggregate der autonomen landwirtschaftlichen Arbeitsmaschine und/oder an die autonome landwirtschaftliche Arbeitsmaschine adaptierte Arbeitsaggregate entsprechend der Simulation ansteuern, so dass der vorab simulierte Arbeitsschritt auf der zu bearbeitenden landwirtschaftlichen Fläche von der autonomen landwirtschaftlichen Arbeitsmaschine durchgeführt wird.

Als Simulationsalgorithmus kann ein geeigneter Algorithmus eingesetzt werden, der die Eingangsgrößen und Randbedingungen der Simulation derart miteinander wechselwirkend verknüpft, dass die Durchführung des Arbeitsschrittes durch die autonome landwirtschaftliche Arbeitsmaschine mit einer derartigen Präzision simuliert werden kann, dass bis auf situationsbedingte unvorhersehbare Ereignisse vor Ort während der Durchführung des Arbeitsschrittes keine Abweichungen zwischen der simulierten und der realen Durchführung des Arbeitsschrittes auftreten, die zu Unregelmäßigkeiten während des Betriebs der autonomen landwirtschaftlichen Arbeitsmaschine während der realen Durchführung des Arbeitsschrittes führen könnten. Insbesondere ist der Simulationsalgorithmus ein lernfähiger Simulationsalgorithmus, also ein Simulationsalgorithmus, der auf einer künstlichen Intelligenz, vorzugsweise einem künstlichen neuronalen Netz, basiert. Der lernfähige Simulationsalgorithmus wird vor der Durchführung einer ersten verfahrensgemäßen Simulation mittels eines Initialdatensatzes trainiert. Die in die Simulation fließenden Eingangsgrößen und Randbedingungen sowie die durch die Simulation erhaltenen Ausgangsgrößen können zum weiteren Trainieren des Simulationsalgorithmus verwendet werden.

Bei einer vorteilhaften Weiterbildung der erfindungsgemäßen Lösung ist vorgesehen, dass das Assistenzsystem dazu ausgebildet und/oder programmiert ist, mittels wenigstens einer Sensoreinrichtung während der Durchführung des Arbeitsschrittes durch die autonome landwirtschaftliche Arbeitsmaschine Echtzeitdaten zu generieren, die Betriebsparameter und/oder Umgebungsparameter und/oder Positionsparameter der autonomen landwirtschaftlichen Arbeitsmaschine repräsentieren, und/oder dass das Assistenzsystem dazu ausgebildet und/oder programmiert ist, mittels wenigstens einer Sensoreinrichtung während der Durchführung des Arbeitsschrittes durch die autonome landwirtschaftliche Arbeitsmaschine Echtzeitdaten bezüglich des zu bearbeitenden Feldes, insbesondere der Position der autonomen landwirtschaftlichen Arbeitsmaschine bezüglich der virtuellen Feldgrenzen, zu ermitteln.

Das Assistenzsystem kann zusätzlich oder alternativ wenigstens eine Sensoreinrichtung zur Erfassung von Betriebsparametern und/oder Umgebungsparametern der autonomen landwirtschaftlichen Arbeitsmaschine aufweisen. Diese Sensoreinrichtung kann kommunizierend mit der Verarbeitungseinrichtung und/oder der Datenbank und/oder der Referenzdatenbank und/oder der Positionsbestimmungseinrichtung verbunden sein.

Das Assistenzsystem kann zusätzlich oder alternativ wenigstens eine Sensoreinrichtung an der autonomen landwirtschaftlichen Arbeitsmaschine und/oder an einem adaptierbaren/adaptierten Arbeitsaggregat aufweisen. Diese Sensoreinrichtung kann kommunizierend mit der Verarbeitungseinrichtung und/oder der Datenbank und/oder der Referenzdatenbank und/oder der Positionsbestimmungseinrichtung verbunden sein.

Bei einer vorteilhaften Weiterbildung der erfindungsgemäßen Lösung ist vorgesehen, dass das Assistenzsystem dazu ausgebildet und/oder programmiert ist, dass die autonome landwirtschaftliche Arbeitsmaschine eine vordefinierte Beabstandung zur, insbesondere nächstliegenden, virtuellen Feldgrenze aufweist, wobei das Assistenzsystem die Beabstandung der autonomen landwirtschaftlichen Arbeitsmaschine bezüglich der, insbesondere nächstliegenden, virtuellen Feldgrenze ermittelt und einer Unterschreitung der vordefinierten Beabstandung entgegenwirkt. Gelangt die autonome landwirtschaftliche Arbeitsmaschine näher als vorbestimmt an eine virtuellen Feldgrenze, so kann das Assistenzsystem dazu ausgebildet und/oder programmiert sein, einen Kurs der autonomen landwirtschaftlichen Arbeitsmaschine zu ändern oder die autonome landwirtschaftliche Arbeitsmaschine anzuhalten.

Ferner betrifft die Erfindung eine Datenbank und/oder Referenzdatenbank eines auf elektronischem Datenaustausch basierenden Assistenzsystems zur Generierung von virtuellen Feldgrenzen gemäß der vorhergehenden und/oder nachfolgenden Beschreibung, wobei wenigstens für eine oder mehrere autonome landwirtschaftliche Arbeitsmaschinen ein Geo-Fence-Datensatz in der Datenbank und/oder Referenzdatenbank hinterlegt ist.

Ferner betrifft die Erfindung ein Verfahren zur Generierung eines Geo-Fence-Datensatzes für ein auf elektronischem Datenaustausch basierendes Assistenzsystem zur Generierung von virtuellen Feldgrenzen gemäß der vorhergehenden und/oder nachfolgenden Beschreibung, wobei der Geo-Fence-Datensatz wenigstens teilweise mittels einer Sensorvorrichtung, insbesondere einer mittels einer Sensorvorrichtung wenigstens einer autonomen landwirtschaftlichen Arbeitsmaschine, gemessen und/oder ermittelt wurde.

Weitere wichtige Merkmale und Vorteile der Erfindung ergeben sich aus den Unteransprüchen, aus der Zeichnung und aus der zugehörigen Figurenbeschreibung anhand der Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in der Zeichnung dargestellt und werden in der nachfolgenden Beschreibung näher erläutert, wobei sich gleiche Bezugszeichen auf gleiche oder ähnliche oder funktional gleiche Komponenten beziehen.

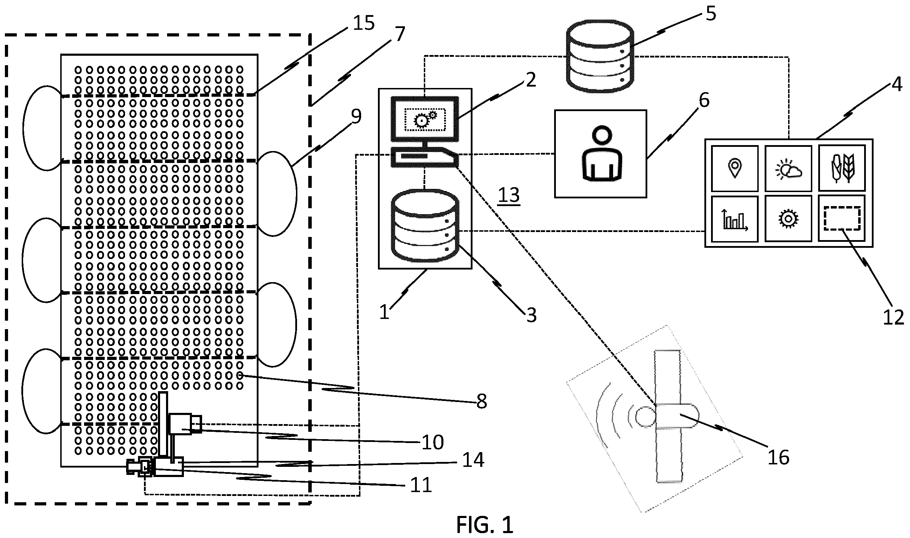

Fig. 1 zeigt ein Assistenzsystem 13 mit einem datenbankbasierten Verwaltungssystem 1, das eine Verarbeitungseinrichtung 2 und eine mit dieser zur Übertragung von Daten verbundene Datenbank 3 umfasst. Die Datenbank 3 kann als zentrale Datenbank 3 oder aber als dezentrale, also verteilte, Datenbank 3 ausgebildet sein. Ist die Datenbank 3 als dezentrale Datenbank 3 ausgebildet, so ist sie vorzugsweise als Blockchain-Datenbank 3 ausgebildet. Auch ist es möglich, dass die Datenbank 3 als cloudbasierte Datenbank 3 implementiert ist. Mit der Verarbeitungseinrichtung 2 kann zudem eine nicht dargestellte Anzeigeeinrichtung verbunden sein, die entweder Teil des Verwaltungssystems 1 oder unabhängig von dem Verwaltungssystem 1 ist. Die nicht dargestellte Anzeigeeinrichtung kann dazu eingerichtet sein, verschiedene von der Verarbeitungseinrichtung 2 erzeugte oder übermittelte grafische Darstellungen einem Nutzer 6 des Verwaltungssystems 1, beispielsweise einem Landwirt, dem eine oder mehrere autonome landwirtschaftliche Arbeitsmaschinen 10, 11, eine oder mehrere daran möglicherweise adaptierte Arbeitsaggregate 14 und/oder eine oder mehrere landwirtschaftliche Flächen, auf denen ein landwirtschaftlicher Arbeitsablauf mit einer Abfolge an Arbeitsschritten durchgeführt werden soll, gehört, anzuzeigen. Die Verarbeitungseinrichtung 2 kann weiterhin mit einer sogenannten Referenzdatenbank 5 zur Übertragung von Daten verbunden sein, in der sogenannte Referenzdaten 4 hinterlegt sein können, auf die die Verarbeitungseinrichtung 2 zugreifen kann. Die Einrichtungen, Vorrichtungen, autonomen landwirtschaftlichen Arbeitsmaschinen und/oder Einheiten 1, 2, 3, 4, 5, 10, 11, 14 und/oder 16 können miteinander zur Übertragung von Daten kabelgebunden und/oder drahtlos kommunizierend verbunden sein.

Wie bereits eingangs angedeutet, sind für die Steuerung von autonomen landwirtschaftlichen Arbeitsmaschinen 10, 11 keine Bediener vorgesehen, die Kenntnisse über einen auszuführenden landwirtschaftlichen Arbeitsablauf mit einer Abfolge an Arbeitsschritten haben. Vielmehr sind die autonomen landwirtschaftlichen Arbeitsmaschinen 10, 11 an und für sich erst einmal "unwissend", also nicht dazu in der Lage einen oder mehrere spezifische Arbeitsschritte der Abfolge von Arbeitsschritten selbsttätig, also autonom, auszuführen. Mit anderen Worten ausgedrückt, solange die autonomen landwirtschaftlichen Arbeitsmaschinen 10, 11 keine Anweisungen erlangen, die sie dazu befähigen, den Arbeitsschritt oder die Arbeitsschritte des Arbeitsablaufs durchzuführen, sind diese hierzu nicht in der Lage. Damit die autonomen landwirtschaftlichen Arbeitsmaschinen 10, 11 in der Lage sind, einen Arbeitsschritt autonom auszuführen, werden demnach Anweisungen erzeugt, die an die autonomen landwirtschaftlichen Arbeitsmaschinen 10, 11 übermittelt werden, so dass diese einen Arbeitsschritt auf einem zu bearbeitenden landwirtschaftlichen Feld, welches durch virtuelle Feldgrenzen 7 begrenzt ist, selbsttätig, also autonom, durchführen kann.

Das auf elektronischem Datenaustausch basierende Assistenzsystem 13, welches insbesondere ein datenbankbasiertes Verwaltungssystem 1 aufweist, ist zur Generierung von virtuellen Feldgrenzen 7 eines landwirtschaftlichen Feldes ausgebildet und/oder programmiert. Das Assistenzsystem 13, insbesondere das datenbankbasierte Verwaltungssystem 1, stellt für eine oder mehrere autonome landwirtschaftliche Arbeitsmaschinen 10, 11 einen Geo-Fence-Datensatz 12 bereit. Das Assistenzsystem 13, insbesondere das datenbankbasierte Verwaltungssystem 1, überwacht die Anwendung des Geo-Fence-Datensatzes 12 durch die eine oder die mehreren autonomen landwirtschaftlichen Arbeitsmaschinen 10, 11. Der Geo-Fence-Datensatz 12 kann Feldgrenz-Daten bezüglich der virtuellen Feldgrenzen 7 aufweisen.

Das auf elektronischem Datenaustausch basierende Assistenzsystem 13, insbesondere das datenbankbasierte Verwaltungssystem 1 des Assistenzsystems 13, ist dazu ausgebildet und/oder programmiert, für eine oder mehrere autonome landwirtschaftliche Arbeitsmaschinen 10, 11 einen Routenplan mit Fahrrouten 15 und/oder 9 entlang des durch die virtuellen Feldgrenzen 7 begrenzten landwirtschaftlichen Feldes zu generieren, um beispielsweise ein auf diesem landwirtschaftlichen Feld ausgebildetes Gut 8 zu ernten, wobei die Fahrrouten 15 und/oder 9 des Routenplans die virtuellen Feldgrenzen 7 derart berücksichtigen, dass einer Überschreitung der virtuellen Feldgrenzen 7 durch eine oder mehrere autonome landwirtschaftliche Arbeitsmaschinen 10, 11 entgegengewirkt wird. Diese Fahrrouten 15 und/oder 9 können abschnittsweise geradlinig und/oder abschnittsweise ungerade, insbesondere gekrümmt, ausgebildet sein. Insbesondere können Vorgewende 9 teilweise gekrümmte Fahrroutenabschnitte ausbilden.

Das Assistenzsystem 13 weist eine Positionsbestimmungseinrichtung 16 zur Positionsbestimmung der einen oder der mehreren autonomen landwirtschaftlichen Arbeitsmaschinen 10, 11 bezüglich der virtuellen Feldgrenzen 7 auf.

Die Positionsbestimmungseinrichtung 16 kann zur Positionsbestimmung mittels Satellitennavigationssignalen ausgebildet und/oder programmiert sein, wobei wenigstens eine Satellitenvorrichtung zur Positionsbestimmung der einen oder der mehreren autonomen landwirtschaftlichen Arbeitsmaschinen 10, 11 bezüglich der virtuellen Feldgrenzen 7 verwendet werden kann. Die Satellitenvorrichtung kann GPS- und/oder Galileo-Satelliten umfassen. Die Positionsbestimmungseinrichtung 16 kann zur Positionsbestimmung gemäß des RTK-(Real-Time-Kinematic-) Verfahrens ausgebildet und/oder programmiert sein, bei der ergänzend zu den Satellitensignalen ein sogenanntes RTK-Signal von einer nicht dargestellten stationären Bodenstation zur Verfügung eingesetzt wird, um die Position der autonomen landwirtschaftlichen Arbeitsmaschine 10, 11 innerhalb der virtuellen Feldgrenzen 7 zu ermitteln. Hierbei kann die nicht dargestellte stationäre Bodenstation außerhalb des durch die virtuellen Feldgrenzen 7 begrenzten landwirtschaftlichen Feldes angeordnet sein.

Die Verarbeitungseinrichtung 2 des Assistenzsystems 13 ist mit einer Datenbank 3 und/oder mit einer Referenzdatenbank 5 kommunizierend verbunden, wobei die Verarbeitungseinrichtung 2 von der einen oder den mehreren autonomen landwirtschaftlichen Arbeitsmaschinen 10, 11 beabstandet angeordnet ist, wobei die Verarbeitungseinrichtung 2 kommunizierend mit der einen oder den mehreren autonomen landwirtschaftlichen Arbeitsmaschinen 10, 11 verbunden ist, um den Geo-Fence-Datensatz 12 bereitzustellen und die eine oder die mehreren autonomen landwirtschaftlichen Arbeitsmaschinen 10, 11 zu überwachen. Insbesondere ist die Verarbeitungseinrichtung 2 des Assistenzsystems 13 außerhalb des durch die virtuellen Feldgrenzen 7 begrenzten landwirtschaftlichen Feldes angeordnet. Ferner ist die Datenbank 3 und/oder die Referenzdatenbank 5 außerhalb des durch die virtuellen Feldgrenzen 7 begrenzten landwirtschaftlichen Feldes angeordnet. Die Referenzdatenbank 5 kann unabhängig und/oder beabstandet von der Datenbank 3 des datenbankbasierten Verwaltungssystems 1 ausgebildet sein.

Das Assistenzsystem 30 kann dazu ausgebildet und/oder programmiert sein, die Fahrrouten 9, 15 des Routenplans derart zu generieren, dass diese Fahrrouten 9, 15 des Routenplans innerhalb des durch die virtuellen Feldgrenzen 7 begrenzten landwirtschaftlichen Feldes positioniert sind. Es kann zusätzlich oder alternativ kann vorgesehen sein, dass das Assistenzsystem 30 dazu ausgebildet und/oder programmiert ist, mittels weiteren nicht dargestellten virtuellen Feldgrenzen Teilbereiche innerhalb des landwirtschaftlichen Feldes zu definieren und für eine oder mehrere autonome landwirtschaftliche Arbeitsmaschinen 10, 11 wenigstens einen Routenplan innerhalb eines solchen Teilbereiches zu generieren.

Das Assistenzsystem 13 kann dazu ausgebildet und/oder programmiert sein, wenigstens einer autonomen landwirtschaftlichen Arbeitsmaschine 10, 11 einen Routenplan mit Fahrrouten 15, 9 wenigstens innerhalb des über virtuelle Feldgrenzen 7 begrenzten landwirtschaftlichen Feldes zu übermitteln, und einen Arbeitsbetrieb der autonomen landwirtschaftlichen Arbeitsmaschine 10, 11 zumindest teilweise wenigstens innerhalb des über die virtuellen Feldgrenzen 7 begrenzten landwirtschaftlichen Feldes zu steuern und den Arbeitsbetrieb der autonomen landwirtschaftlichen Arbeitsmaschine 10, 11 wenigstens innerhalb des über die virtuellen Feldgrenzen 7 begrenzten landwirtschaftlichen Feldes zu überwachen.

Das Assistenzsystem 13 kann dazu ausgebildet und/oder programmiert sein, für einen landwirtschaftlichen Arbeitseinsatz der einen oder mehreren autonomen landwirtschaftlichen Arbeitsmaschinen 10, 11 in Abhängigkeit des Geo-Fence-Datensatzes bezüglich eines durch virtuelle Feldgrenzen 7 des Geo-Fence-Datensatzes 12 festgelegten landwirtschaftlichen Feldes eine Optimierung einer Routenplanung, einer Arbeitsgeschwindigkeit und/oder einer Einstellung der einen oder mehreren autonomen landwirtschaftlichen Arbeitsmaschinen 10, 11, insbesondere in Abhängigkeit der Anzahl der eingesetzten autonomen landwirtschaftlichen Arbeitsmaschinen 10, 11, der Ernte-/Umweltbedingungen und/oder einer benutzerseitig vorgegebenen Arbeits- und/oder Ernte-Strategie durchzuführen.

Das Assistenzsystem 13, insbesondere das datenbankbasierte Verwaltungssystem 1 des Assistenzsystems 13, ist dazu ausgebildet und/oder programmiert, den Routenplan mit Fahrrouten 15 und/oder 9 an alle autonomen landwirtschaftlichen Arbeitsmaschinen 10, 11 zu übermitteln, und einen Arbeitsbetrieb der autonomen landwirtschaftlichen Arbeitsmaschinen 10, 11 während eines Erntevorganges, in dem das zu erntende Gut 8 von der autonomen landwirtschaftlichen Arbeitsmaschine 10 mittels einem Arbeitsaggregat geerntet wird, zumindest teilweise zu steuern und den Arbeitsbetrieb der autonomen landwirtschaftlichen Arbeitsmaschinen 10, 11 zu überwachen.

Wie in der Fig. 1 dargestellt ist, bewirkt das Assistenzsystem 13, insbesondere das datenbankbasierte Verwaltungssystem 1 des Assistenzsystems 13, dass ein Überladevorgang eines geernteten Gutes 8 zwischen wenigstens zwei autonomen landwirtschaftliche Arbeitsmaschinen 10 und 11 erfolgt.

Das Assistenzsystem 13 kann mittels der Verarbeitungseinrichtung 2 ein digitales Abbild eines durch die virtuellen Feldgrenzen begrenzten landwirtschaftlichen Feldes generieren bzw. erzeugen und dieses in der mit der Verarbeitungseinrichtung 2 zur Übertragung von Daten verbundenen bzw. kommunizierenden Datenbank 3 speichern. Weiterhin kann mittels der Verarbeitungseinrichtung 2 ein digitales Abbild einer autonomen landwirtschaftlichen Arbeitsmaschine 10 ,11 generiert bzw. erzeugt werden und dieses ebenfalls in der mit der Verarbeitungseinrichtung 2 zur Übertragung von Daten verbundenen bzw. kommunizierenden Datenbank 3 gespeichert werden. Sowohl das digitale Abbild des zu bearbeitenden landwirtschaftlichen Feldes als auch das digitale Abbild der autonomen landwirtschaftlichen Arbeitsmaschine 10, 11 stellen jeweils einen sogenannten digitalen Zwilling der realen Strukturen, also dem realen landwirtschaftlichen Feld und der realen autonomen landwirtschaftlichen Arbeitsmaschine 10, 11 dar, der die spezifischen Charakteristika der realen Strukturen im Wesentlichen identisch wiedergibt. Neben den digitalen Abbild des zu bearbeitenden landwirtschaftlichen Feldes und dem digitalen Abbild der autonomen landwirtschaftlichen Arbeitsmaschine 10, 11 kann mittels der Verarbeitungseinrichtung 2 ein weiteres digitales Abbild 14 eines an die autonome landwirtschaftliche Arbeitsmaschine 10, 11 adaptierbaren Arbeitsaggregats generiert bzw. erzeugt werden, welches anschließend ebenfalls in der mit der Verarbeitungseinrichtung 2 zu Übertragung von Daten verbundenen bzw. kommunizierenden Datenbank 3 gespeichert wird. Die digitalen Abbilder können lediglich als digitale Datenmodelle ausgebildet sein, optional aber auch ein dreidimensionales virtuelles Abbild der realen Strukturen umfassen, anhand dessen grafisch die verschiedenen Merkmale dieser Strukturen für den Nutzer 6 sichtbar werden.

Für das Generieren des digitalen Abbilds des zu bearbeitenden landwirtschaftlichen Feldes kann die Verarbeitungseinrichtung auf Referenzdaten zugreifen, die agronomische Daten, insbesondere Bodendaten, Bestandsdaten, Ertragsdaten und/oder Felddaten, Geodaten und/oder Wetterdaten und/oder Qualitätskriterien und/oder Qualitätswerte, sind, wobei die Referenzdaten in der Datenbank 3 und/oder in einer von der Datenbank 3 unabhängigen Referenzdatenbank 4 hinterlegt sind und die Verarbeitungseinrichtung 2 mit der Referenzdatenbank 4 zur Übertragung von Daten verbunden, insbesondere kommunizierend verbunden, ist.

Für das Generieren des digitalen Abbilds der autonomen landwirtschaftlichen Arbeitsmaschine 10, 11 kann die Verarbeitungseinrichtung 2 auf Daten der autonomen landwirtschaftlichen Arbeitsmaschine 10, 11 zugreifen. Diese Daten werden insbesondere durch Geometriedaten, Betriebszustandsdaten und/oder Ausstattungsdaten der autonomen landwirtschaftlichen Arbeitsmaschine 10, 11 gebildet. So können die Daten beispielsweise Daten zu den in der autonomen landwirtschaftlichen Arbeitsmaschine 10, 11 vorhandenen Arbeitsaggregaten, Daten zu den Maßen der autonomen landwirtschaftlichen Arbeitsmaschine 10, 11, Daten zu Füllständen von Betriebsmitteln der autonomen landwirtschaftlichen Arbeitsmaschine 10, 11, Daten zu Verschleißzuständen der in der autonomen landwirtschaftlichen Arbeitsmaschine 10, 11 vorhandenen Arbeitsaggregate oder dergleichen umfassen.

Für das Generieren des digitalen Abbilds eines an die autonome landwirtschaftliche Arbeitsmaschine 10, 11 adaptierbaren Arbeitsaggregats kann die Verarbeitungseinrichtung 2 auf Daten des an die autonome landwirtschaftliche Arbeitsmaschine 10, 11 adaptierbaren Arbeitsaggregats zugreifen. Diese Daten werden insbesondere ebenfalls durch Geometriedaten, Betriebszustandsdaten und/oder Ausstattungsdaten des Arbeitsaggregats gebildet. So können die Daten beispielsweise ebenfalls Daten zu den in dem Arbeitsaggregat vorhandenen Komponenten, Daten zu den Maßen des Arbeitsaggregats, Daten zu Füllständen von Betriebsmitteln des Arbeitsaggregats, Daten zu Verschleißzuständen der in dem Aggregat vorhandenen Komponenten oder dergleichen umfassen.

### Bezugszeichenliste

- 1: Verwaltungssystem
- 2: Verarbeitungseinrichtung
- 3: Datenbank
- 4: Referenzdaten
- 5: Referenzdatenbank
- 6: Nutzer
- 7: virtuelle Feldgrenze
- 8: zu erntendes Gut
- 9: Vorgewende
- 10: autonome landwirtschaftliche Arbeitsmaschine
- 11: weitere autonome landwirtschaftliche Arbeitsmaschine
- 12: Geo-Fence-Datensatz
- 13: Assistenzsystem
- 14: adaptierbares/adaptiertes Arbeitsaggregat
- 15: Fahrrouten
- 16: Positionsbestimmungseinrichtung

## Patentansprüche

1. Auf elektronischem Datenaustausch basierendes Assistenzsystem (13) zur Generierung von virtuellen Feldgrenzen (7),
**dadurch gekennzeichnet,**
**dass** das Assistenzsystem (13) dazu ausgebildet und/oder programmiert ist, für eine oder mehrere autonome landwirtschaftliche Arbeitsmaschinen (10, 11) einen Geo-Fence-Datensatz (12) bereitzustellen, und die Anwendung des Geo-Fence-Datensatzes (12) durch die eine oder die mehreren autonomen landwirtschaftlichen Arbeitsmaschinen (10, 11) zu überwachen.

2. Auf elektronischem Datenaustausch basierendes Assistenzsystem (13) zur Generierung von virtuellen Feldgrenzen (7) nach Anspruch 1,
**dadurch gekennzeichnet,**
**dass** der Geo-Fence-Datensatz (12) Feldgrenz-Daten bezüglich der virtuellen Feldgrenzen (7) eines landwirtschaftlichen Feldes, welches von der einen oder den mehreren autonomen landwirtschaftlichen Arbeitsmaschinen (10, 11) befahren wird, aufweist.

3. Auf elektronischem Datenaustausch basierendes Assistenzsystem (13) zur Generierung von virtuellen Feldgrenzen (7) nach Anspruch 1 oder 2,
**dadurch gekennzeichnet,**
**dass** das Assistenzsystem (13) dazu ausgebildet und/oder programmiert ist, die Anwendung des Geo-Fence-Datensatzes (12) durch die eine oder die mehreren autonomen landwirtschaftlichen Arbeitsmaschinen (10, 11) dahingehend zu überwachen, dass keine der autonomen landwirtschaftlichen Arbeitsmaschinen (10, 11) eine virtuelle Feldgrenze (7) unerlaubt überschreitet.

4. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) zur Überwachung der Anwendung des Geo-Fence-Datensatzes (12) durch die eine oder die mehreren autonomen landwirtschaftlichen Arbeitsmaschinen (10, 11) dazu ausgebildet und/oder programmiert ist, basierend auf einer ermittelten Position der einen oder der mehreren autonomen landwirtschaftlichen Arbeitsmaschinen (10, 11) bezüglich der virtuellen Feldgrenzen (7) die eine oder die mehreren autonomen landwirtschaftlichen Arbeitsmaschinen (10, 11) derart anzusteuern, dass einer Überschreitung der virtuellen Feldgrenzen (7) durch eine oder mehrere autonome landwirtschaftliche Arbeitsmaschinen (10, 11) entgegengewirkt wird.

5. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) eine Verarbeitungseinrichtung (2) aufweist, die mit einer Datenbank (3) und/oder mit einer Referenzdatenbank (5) kommunizierend verbunden ist, wobei die Verarbeitungseinrichtung (2) von der einen oder den mehreren autonomen landwirtschaftlichen Arbeitsmaschinen (10, 11) beabstandet angeordnet ist, wobei die Verarbeitungseinrichtung (2) kommunizierend mit der einen oder den mehreren autonomen landwirtschaftlichen Arbeitsmaschinen (10, 11) verbunden ist, um den Geo-Fence-Datensatz (12) bereitzustellen und die eine oder die mehreren autonomen landwirtschaftlichen Arbeitsmaschinen (10, 11) zu überwachen.

6. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) eine Positionsbestimmungseinrichtung (16) zur Positionsbestimmung der einen oder der mehreren autonomen landwirtschaftlichen Arbeitsmaschinen (10, 11) bezüglich der virtuellen Feldgrenzen (7) aufweist.

7. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** wenigstens eine autonome landwirtschaftliche Arbeitsmaschine (10, 11) wenigstens ein adaptiertes Arbeitsaggregat (14) aufweist.

8. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) dazu ausgebildet und/oder programmiert ist, während der Überwachung der einen oder der mehreren autonomen landwirtschaftlichen Arbeitsmaschinen (10, 11) ein Verlassen dieser einen oder dieser mehreren autonomen landwirtschaftlichen Arbeitsmaschinen (10, 11) eines durch virtuelle Feldgrenzen (7) des Geo-Fence-Datensatzes (12) festgelegten landwirtschaftlichen Feldes zu verhindern.

9. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) dazu ausgebildet und/oder programmiert ist, wenigstens einer autonomen landwirtschaftlichen Arbeitsmaschine (10, 11) einen Routenplan mit Fahrrouten (15) wenigstens innerhalb eines über virtuelle Feldgrenzen (7) begrenzten landwirtschaftlichen Feldes zu übermitteln, und einen Arbeitsbetrieb der autonomen landwirtschaftlichen Arbeitsmaschine (10, 11) zumindest teilweise wenigstens innerhalb des über die virtuellen Feldgrenzen (7) begrenzten landwirtschaftlichen Feldes zu steuern und den Arbeitsbetrieb der autonomen landwirtschaftlichen Arbeitsmaschine (10, 11) wenigstens innerhalb des über die virtuellen Feldgrenzen (7) begrenzten landwirtschaftlichen Feldes zu überwachen.

10. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) zum Bereitstellen des Geo-Fence-Datensatzes (12) dazu ausgebildet und/oder programmiert ist, auf Referenzdaten (4) zuzugreifen, die in einer Datenbank (3) und/oder in einer von der Datenbank (3) unabhängigen Referenzdatenbank (5) hinterlegt sind.

11. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) dazu ausgebildet und/oder programmiert ist, wenigstens eine Simulation von Arbeitswegen und/oder Abladepunkten und/oder Maschinendaten und/oder Einstellungen wenigstens einer autonomen landwirtschaftlichen Arbeitsmaschinen (10, 11) anhand einer Strategievorgabe vorzunehmen und diese wenigstens eine autonome landwirtschaftliche Arbeitsmaschine (10, 11) basierend auf Ausgangsgrößen der Simulation innerhalb des durch virtuelle Feldgrenzen (7) des Geo-Fence-Datensatzes (12) festgelegten landwirtschaftlichen Feldes anzusteuern und/oder zu überwachen.

12. Auf elektronischem Datenaustausch basierendes Assistenzsystem (13) zur Generierung von virtuellen Feldgrenzen (7) nach Anspruch 11,
**dadurch gekennzeichnet,**
**dass** das Assistenzsystem (13) dazu ausgebildet und/oder programmiert ist, dass mindestens ein Optimierungsziel nutzerspezifisch vorgegeben wird, wobei das mindestens eine Optimierungsziel als Randbedingung in der Simulation verwendet wird.

13. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) dazu ausgebildet und/oder programmiert ist, für einen landwirtschaftlichen Arbeitseinsatz der einen oder mehreren autonomen landwirtschaftliche Arbeitsmaschinen (10, 11) in Abhängigkeit des Geo-Fence-Datensatzes bezüglich eines durch virtuelle Feldgrenzen (7) des Geo-Fence-Datensatz (12) festgelegten landwirtschaftlichen Feldes eine Optimierung einer Routenplanung, einer Arbeitsgeschwindigkeit und/oder einer Einstellung der einen oder mehreren autonomen landwirtschaftlichen Arbeitsmaschinen (10, 11), insbesondere in Abhängigkeit der Anzahl eingesetzter autonomer landwirtschaftlicher Arbeitsmaschinen (10, 11), der Ernte-/Umweltbedingungen und/oder einer benutzerseitig vorgegebenen Arbeits- und/oder Ernte-Strategie durchzuführen.

14. Auf elektronischem Datenaustausch basierendes Assistenzsystem (13) zur Generierung von virtuellen Feldgrenzen (7) nach einem der vorhergehenden Ansprüche,
**dadurch gekennzeichnet,**
**dass** das Assistenzsystem (13) zur Ausführung der folgenden Schritte zur Erzeugung von Daten zur Steuerung wenigstens einer autonomen landwirtschaftlichen Arbeitsmaschine (10, 11) ausgebildet und/oder programmiert ist:
- Generieren eines digitalen Abbilds eines zu bearbeitenden landwirtschaftlichen Feldes mit virtuellen Feldgrenzen (7) basierend auf dem Geo-Fence-Datensatz (12) durch eine Verarbeitungseinrichtung (2) und Speichern des digitalen Abbilds des zu bearbeitenden landwirtschaftlichen Feldes in einer mit der Verarbeitungseinrichtung (2) zur Übertragung von Daten verbundenen Datenbank (3);
- Generieren eines digitalen Abbilds wenigstens einer oder mehrerer autonomen landwirtschaftlichen Arbeitsmaschinen (10, 11) durch die Verarbeitungseinrichtung (2) und Speichern des digitalen Abbilds der autonomen landwirtschaftlichen Arbeitsmaschine in der Datenbank (3);
- Simulieren mindestens eines Arbeitsschrittes einer Abfolge an Arbeitsschritten umfassenden landwirtschaftlichen Arbeitsablaufs anhand des digitalen Abbilds des zu bearbeitenden landwirtschaftlichen Feldes unter Anwendung eines Simulationsalgorithmus durch die Verarbeitungseinrichtung (2), wobei aus dem digitalen Abbild der autonomen landwirtschaftlichen Arbeitsmaschine (10, 11) Daten abgeleitet werden, die als Randbedingungen in der Simulation verwendet werden, wobei die virtuellen Feldgrenzen (7) des Geo-Fence-Datensatzes (12) als Randbedingungen in der Simulation verwendet werden, und wobei als Ausgangsgröße der Simulation eine Anweisung zur Durchführung des Arbeitsschrittes durch die wenigstens eine autonome landwirtschaftliche Arbeitsmaschine (10, 11) erzeugt wird;
- Übermitteln der als Ausgangsgröße der Simulation erzeugten Anweisung an eine Steuereinrichtung der wenigstens einen autonomen landwirtschaftlichen Arbeitsmaschine (10, 11) und Ausführen der Anweisung durch die Steuereinrichtung der wenigstens einen autonomen landwirtschaftlichen Arbeitsmaschine (10, 11).

15. Datenbank (3) und/oder Referenzdatenbank (5) eines auf elektronischem Datenaustausch basierenden Assistenzsystems (13) zur Generierung von virtuellen Feldgrenzen (7) nach einem der vorhergehenden Ansprüche, wobei wenigstens für eine oder mehrere autonome landwirtschaftliche Arbeitsmaschinen (10, 11) ein Geo-Fence-Datensatz (12) in der Datenbank (3) und/oder Referenzdatenbank (5) hinterlegt ist.

16. Verfahren zur Generierung eines Geo-Fence-Datensatzes (12) für ein auf elektronischem Datenaustausch basierendes Assistenzsystem (13) zur Generierung von virtuellen Feldgrenzen (7) nach einem der vorhergehenden Ansprüche 1 bis 14, wobei der Geo-Fence-Datensatz (12) wenigstens teilweise mittels einer Sensorvorrichtung generiert wird.
